# EUROPÄISCHE PATENTSCHRIFT

(11) **EP 0 897 403 B1**
(45) Veröffentlichungstag und Bekanntmachung des Hinweises auf die Patenterteilung: **29.11.2000**
(21) Anmeldenummer: 97923016.6
(22) Anmeldetag: 07.05.1997
(51) Int. Cl.: C08G 18/10, C08K 5/20

(54) **ZWEIKOMPONENTEN-POLYURETHANDICHT- UND -KLEBMASSE**
TWO-COMPONENT POLYURETHANE SEALING AND ADHESIVE COMPOUND
MATERIAU D'ETANCHEITE ET ADHESIF POLYURETHANIQUE A DEUX COMPOSANTS

(30) Priorität: 08.05.1996 DE 19618537
(43) Veröffentlichungstag der Anmeldung: 24.02.1999
(73) Patentinhaber: PCI Augsburg GmbH, 86159 Augsburg (DE)
(72) Erfinder: GRAF, Wilhelm, D-86199 Augsburg (DE); MÜLLER, Elke, D-86161 Augsburg (DE); WIEDEMANN, Markus, D-86456 Gablingen (DE)
(74) Vertreter: Kindler, Matthias, Dr. Dipl.-Chem.
(86) Internationale Anmeldenummer: EP9702353
(87) Internationale Veröffentlichungsnummer: WO9742245

(56) Entgegenhaltungen:
- EP-A- 0 467 533
- US-A- 4 123 412
- US-A- 5 087 661
- DATABASE WPI Section Ch, Week 9345 Derwent Publications Ltd., London, GB; Class A25, AN 93-357380 XP002036913 & JP 05 263 061 A (TAOKA CHEM CO LTD) , 12.Oktober 1993
- DATABASE WPI Section Ch, Week 9246 Derwent Publications Ltd., London, GB; Class A25, AN 92-376359 XP002036914 & JP 04 275 385 A (TAOKA CHEM CO LTD) , 30.September 1992
- DATABASE WPI Section Ch, Week 8809 Derwent Publications Ltd., London, GB; Class A25, AN 88-060442 XP002036915 & JP 63 015 876 A (MITSUI TOATSU CHEM INC) , 22.Januar 1988

## Beschreibung

Die Erfindung betrifft ein Mehrkomponentenkit für eine Polyurethandicht- und -klebmasse und die damit herstellbare Dicht- und Klebmasse. Sie betrifft insbesondere ein Mehrkomponentenkit bzw. eine Dicht- und Klebmasse, die ein Diamid enthält, das die Chemikalienbeständigkeit und die Glättbarkeit der Masse erhöht.

EP-A-467533 offenbart den Zusatz von Polyamiden und Polyamidzusammensetzungen zu Einkomponenten-Polyurethandichtstoff-Formulierungen. Ein Beispiel eines Polyamids betrifft das Reaktionsprodukt eines Polyamins mit der Formel (D) [NH]y und einer Monocarbonsäure der Formel (E)-COOH, worin y mindestens 2, und (D) und (E) unabhängig voneinander eine aliphatische, aromatische, cycloaliphatische oder arylaliphatische Gruppe ist. Beispiele für das Polyamin umfassen Ethylendiamin und 1,4 Diaminobuthan. Das Polyamid wird als Thixotropierungsmittel eingesetzt.

JP-A-63015876 beschreibt eine Einkomponenten-Polyurethandichtstoff-Zusammensetzung, die ein Fettsäurediamid als Thixotropierungsmittel in einer Menge von 1 bis 8 Gew.-% enthält. Das Thixotropierungsmittel wird durch Umsetzen von aus hydriertem Rizinusöl gewonnenen Fettsäuren und gesättigten Fettsäuren mit Ethylendiamin oder 1,4 Diaminobuthan gewonnen. Der nach der Lehre dieser Druckschrift gewonnene Einkomponenten-Polyurethandichtstoff entwickelt keine Risse.

JP-A-5263061 und JP-A-4275385 beschreiben Zweikomponenten-Polyurethansysteme, die ein Carbonsäure(Fettsäure)amid als Thixotropierungsmittel enthalten.

Dicht- und Klebmassen auf Polyurethanbasis finden z.B. Einsatz im Hochbau, aber auch im Tiefbau, da sie sich gut bei Dauernaßbelastung eignen.

Polyurethanmassen werden auch zum Verkleben und gleichzeitigem Abdichten von verschiedensten Substraten, z.B. Metallteilen im Maschinenbau, Fahrzeugbau, Schiffsbau und Containerbau eingesetzt. Hierbei spielt z.B. die Chemikalienbeständigkeit im Motorraum gegen Öle, Bremsflüssigkeit oder Salzwasser eine bedeutende Rolle.

Diese Massen werden z.B. aus einer Basiskomponente und einer Härterkomponente gebildet, die kurz vor der Anwendung gemischt werden. Die Härterkomponente enthält als reaktiven Bestandteil Isocyanatoligomere oder Isocyanatpräpolymere mit freien NCO-Gruppen, die mit den OH-Funktionen eines Polyols oder den NH-Funktionen eines Polyamins in der Basiskomponente unter Vernetzung und Aushärtung abreagieren. Der Vorteil gegenüber Polyurethanmassen, die aus einer Komponente gebildet werden, ist, daß zwei- oder mehrkomponentige Systeme mit Basis- und Härterkomponente in kurzer Zeit einheitlich durchhärten und oft schon nach einem Tag die erforderliche Festigkeit erreichen.

In der Praxis treten bei der Anwendung von Mehrkomponentendichtmassen jedoch immer wieder verschiedene Probleme auf. Diese sind darauf zurückzuführen, daß die Anforderungen an Mehrkomponentendichtmassen genau aufeinander abgestimmte physikalische und chemische Parameter erfordern.

Stellt man die Masse so ein, daß sie sich gut mischen und abpressen bzw. spritzen läßt, kann die Oberfläche der Masse (z.B. in der Fuge) erst nach längerer Zeit geglättet werden, da das Material anfangs noch zu weich ist und beim Versuch, eine glatte Oberfläche zu erzeugen, entweder die Form nicht beibehält oder am Werkzeug (oder Finger) kleben bleibt.

Stellt man die Masse von Anfang an so ein, daß sie eine Konsistenz aufweist, die zu guter Glättbarkeit führt, läßt sie sich nur schlecht extrudieren und beispielsweise kaum abpressen und mit einer Spritze in die Fuge einbringen.

Soll die Polyurethanmasse chemikalienbeständig sein (z.B. bei der Anwendung in der Klärtechnik), so sind Zusätze erforderlich, um das Eindringen von Wasser bzw. wässrigen Chemikalienlösungen in die Polyurethanmasse zu verhindern. Ein wichtiges Kriterium ist die Beständigkeit gegen Laugen und Säuren, wie sie nach den "Bau- und Prüfgrundsätzen für Zweikomponenten-Dichtstoffe für Abwasseranlagen" des Instituts für Bautechnik (Fassung vom März 1981) gefordert wird. In dieser Prüfnorm wird die Beständigkeit der Dichtstoffe bei pH 2 und 12 anhand von Volumen- und Gewichtszunahme oder -abnahme bewertet.

Um die Säure- und Laugenbeständigkeit zu erhöhen, setzt man bislang Polyurethanmassen z.B. flüssige Kohlenwasserstoffharze zu.

Kohlenwasserstoffharze haben jedoch den Nachteil, daß die Dichtmassen sich nicht ausreichend glätten und verarbeiten lassen. Zudem sind sie sehr teuer.

Man sucht daher seit geraumer Zeit nach billigen Alternativen für Mehrkomponentenpolyurethankits, die zu Polyurethandicht-und -klebmassen führen, die bei gleicher oder besserer Chemikalienbeständigkeit sich besser glätten lassen und gleichzeitig optimale Eigenschaften hinsichtlich Standfestigkeit und Extrudierbarkeit der Masse aufweisen.

Diese Aufgabe wird gelöst durch ein Mehrkomponentenkit für eine Polyurethandicht-und -klebmasse, das mindestens eine Basiskomponente und eine Härterkomponente umfaßt, wobei
die Basiskomponente 0,1-88 Gew.% eines oder mehrerer monomerer oder polymerer Polyole und/oder Polyamine mit einer mittleren Funktionalität von zwei oder mehr OH-Gruppen pro Molekül bzw. zwei oder mehr primäre oder sekundäre NH-Gruppen pro Molekül, und
die Härterkomponente 2,0-97,9 Gew.% eines oder mehrerer Oligomere oder Präpolymere mit einer mittleren Funktionalität von zwei oder mehr freien Isocyanatgruppen pro Molekül enthält,
die Basis- und/oder die Härterkomponente 0-8 Gew.% Lösemittel, 0-2 Gew.% eines Katalysators, 0-45 Gew.% Weichmacher, 0-65 Gew.% Füllstoffe, 0-40 Gew.% Thixotropierungsmittel, 0-5 Gew.% Pigmente und 0-10 Gew.% sonstige Additive enthalten,
das dadurch gekennzeichnet ist, daß die Basis- und/oder die Härterkomponente insgesamt 2-25 Gew.% eines oder mehrerer Diamide der Formeln (I) und/oder (II) 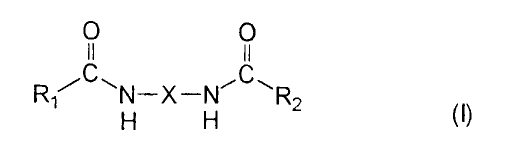 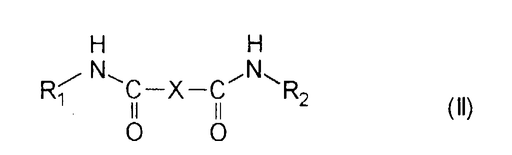 worin R₁ und R₂ verschieden oder gleich sind und eine verzweigte oder unverzweigte C₁₂₋₂₄-Alkylgruppe oder eine verzweigte oder unverzweigte C₁₂₋₂₄-Alkenylgruppe, die jeweils mit OH substituiert sein können, und X eine C₂₋₄-Alkyleneinheit bedeuten, enthalten,
wobei sich alle Gew.%-Angaben auf das Gesamtgewicht von Basis- und Härterkomponente beziehen.

Als Polyol der Basiskomponente verwendet man monomere oder polymere Polyole mit einer mittleren Funktionalität von zwei oder mehr OH-Gruppen pro Molekül, wobei der Wert 2-3 bevorzugt ist. Das mittlere Molekulargewicht der verwendeten Polyole liegt vorzugsweise zwischen 90 und 10.000, insbesondere zwischen 150 und 6.000. Geeignet sind beispielsweise Polyetherpolyole, die aus Ethylenoxid, Propylenoxid, Butylenoxid oder Mischungen dieser aufgebaut sind, aus Tetrahydrofuran aufgebaute Polyetherpolyole, Polyesterpolyole, Polyacrylatpolyole, Polybutadienpolyole, Polyole aus nachwachsenden Rohstoffen (z.B. Rizinusöl und Derivate davon), Polycarbonatpolyole und niedermolekulare Polyole (z.B. Hexandiol). Gegebenenfalls kann auch Wasser als Polyol eingesetzt werden.

Monomere oder polymere Polyamine mit einer mittleren Funktionalität von zwei oder mehr primären oder sekundären NH-Gruppen pro Molekül können anstelle der Polyole oder zusätzlich zu den Polyolen in der Basiskomponente vorliegen. Beispielhaft können dazu Diamine wie 1,4-Diaminobenzol, 2,4-Diaminotoluol oder auch Aminoverbindungen mit einer Alkylgruppe in der Ortho-Stellung genannt werden. Spezielle Beispiele sind weiterhin gegeben durch Isophorondiamin, Bis(4-aminocyclohexyl)-methan, 1,4-Diaminocyclohexan, Ethylendiamin und seine Homologen sowie Piperazin. Um die Reaktivität herabzusetzen, bietet es sich auch an, spezielle sterisch gehinderte Polyamine einzusetzen.

In den bevorzugten Ausführungsformen der Erfindung werden jedoch ausschließlich Polyole (und keine Polyamine) in der Basiskomponente verwendet.

Der Hauptbestandteil der Härterkomponente ist ein Oligomer oder Präpolymer, das reaktive Isocyanatgruppen (mit einer mittleren Funktionalität von zwei oder mehr OCN-Gruppen/Molekül) aufweist, die mit den OH-Funktionen des Polyols bzw. den NH-Gruppen des Polyamins der Basiskomponente unter Vernetzung und Aushärten der Masse abreagieren. Die Herstellung von Oligomeren oder Präpolymeren erfolgt üblicherweise durch Reaktion eines Überschusses eines aliphatischen oder aromatischen Polyisocyanats mit einer Polyolkomponente. Als Polyisocyanat verwendet man oft handelsübliche Diisocyanate, wie beispielsweise Toluylendiisocyanat, Diphenylmethandiisocyanat, Isophorondiisocyanat, Hexamethylendiisocyanat, Xylylendiisocyanat. Gleichermaßen können Polyisocyanate mit einer Funktionalität größer als 2 gewählt werden. Die Zusammensetzung der Polyole und Polyisocyanate richtet sich nach den gewünschten mechanischen Eigenschaften und sonstigen Anforderungen an die Polyurethanmasse. Es ist bevorzugt, daß man beim Einsatz von aromatischen oder aliphatischen Diisocyanaten das NCO/OH-Verhältnis auf einen Wert von 1,3-2, besser 1,5-2, einstellt. Es kann jedoch auch höher gewählt werden, wenn man Polyisocyanate mit Funktionalitäten größer 2 als Ausgangsverbindung wählt.

Geeignete Präpolymere sind darüberhinaus im Handel erhältlich (z.B. Desmodur E 14 der Firma Bayer AG).

Die Diamide der Formeln (I) und/oder (II) bzw. ihre Gemische haben wachsartige Eigenschaften mit stark hydrophobierender Wirkung. Gemische von Diamiden der Formel (I) sind auch kommerziell erhältlich. Bei diesen wird üblicherweise ein Ethylendiamin oder 1,4-Diaminobutan mit einem Fettsäuregemisch umgesetzt.

In den Diamiden der Formel (I) und/oder (II) sind die Reste R₁ und R₂ verschieden oder gleich und stellen vorzugsweise eine gesättigte, nichtsubstituierte, unverzweigte C₁₂-C₂₄-Alkylgruppe dar. Besonders eignen sich Diamide der Formel (I), bei denen R₁ und R₂ eine Kettenlänge von C₁₆ bis C₁₈ haben, und X eine Ethyleneinheit ist.

Gegebenenfalls, jenach Anwendungsbereich der Dicht- und Klebmasse, enthält eine der beiden oder beide Komponenten auch einen oder mehrere der folgenden Bestandteile.

Zum Einstellen der Viskosität kann man 0-8 Gew.% Lösemittel zusetzen. Dazu eignen sich Alkylbenzole, wie z.B. Xylol oder auch hochsiedende Benzinfraktionen.

Weichmacher werden in einer Menge von 0-45 Gew.% zugesetzt. Als Weichmacher eignen sich Adipinsäureester (z.B. Di(2-ethylhexyl)adipat), Phthalsäureester (z.B. Diisodecylphthalat), Alkylsulfonsäureester des Phenols oder Kresols, Fettsäureester (z.B. Polyglykolfettsäureester), Chlorparaffine oder Phosphorsäureester (z.B. Tri(2-ethylhexyl)phosphat).

In der Basiskomponente und/oder der Härterkomponente für die erfindungsgemäße Dicht- und Klebmasse sind darüberhinaus 0-65 Gew.% Füllstoffe enthalten. Geeignete Füllstoffe sind beschichtetes oder unbeschichtetes Calciumcarbonat, Calciumsulfat, Bariumsulfat, Kaolin, Aluminiumsilikathydrat, Magnesiumschichtsilikat oder Quarzmehl. Diese können auch als Mischungen eingesetzt werden.

Falls erforderlich, gibt man der Basis- und/oder Härterkomponente ein Thixotropierungsmittel bei, um das sogenannte Standvermögen der fertig angerührten Mehrkomponentenmischung zu verbessern und zu verhindern, daß die Form der aufgebrachten Polyurethanmasse sich vor dem Erhärten noch verändert. Die eingesetzte Menge an Thixotropierungsmittel hängt vom verwendeten Material ab und kann 0-40 Gew.% betragen. Sie liegt vorzugsweise bei 0-10 Gew.%, besser 0-7 Gew.%, bei Harnstoffderivaten, und vorzugsweise bei 0-10 Gew.%, besser 0-5 Gew.%, wenn man pyrogene Kieselsäuren verwendet. Gleichermaßen eignet sich hydriertes Rizinusöl (auch in modifizierter Form) in einer Menge von 0-3 Gew.%, bevorzugterweise 0-1,5 Gew.%, sowie feinteilige gefällte Calciumcarbonate, die in einer Menge von 0-40 Gew.%, bevorzugterweise 0-30 Gew.%, eingesetzt werden.

Pigmente werden in üblicher Weise in einer Menge von 0-5 Gew.-% zur Farbgebung zugegeben.

Darüber hinaus kann es je nach Anwendungsbereich vorteilhaft sein, 0-10 Gew.-% sonstige Additive der Basis- und/oder der Härterkomponente beizumengen. Beispielsweise können die folgenden Additive eingesetzt werden.

| **chem. Bezeichnung** | **Einsatzkonzentration** | **Zweck** |
|---|---|---|
| Radizide | 0-1%/bevorz. 0,3-0,6% | gegen Einwachsen von Wurzeln |
| Lichtschutzmittel | 0-1%/bevorz. 0,2-0,6% | gegen Vergilbung |
| Haftvermittler | 0-0,5%/bevorz.0-0,3% | Verbesserung der Haftung |
| Trockner | 0-4% | Trocknung |
| Antioxidantien | 0-1%/bevorz.0,2-0,6% | feuchter Stoffe gegen radikalische Kettenabbaureaktionen bei Bewitterung |

Die Prozentangaben in der Tabelle sind Gew.%, bezogen auf das Gesamtgewicht der Basis- und Härterkomponente.

Zur schnelleren Härtung können auch 0-2 Gew.% Katalysator eingesetzt werden. Hierzu eignen sich beispielsweise tertiäre Amine wie N,N-Dimethylbenzylamin oder Zinn enthaltende Verbindungen wie Dibutylzinndilaurat.

Bevorzugterweise werden die einzelnen Bestandteile so auf Basis- und Härterkomponente verteilt, daß die Basiskomponente neben 0,1-88 Gew.% des Polyols und/oder des Polyamins 2-25 Gew.% eines oder mehrerer Diamide der Formeln (I) und/oder (II), 0-8 Gew.% Lösemittel, 0-2 Gew.% eines Katalysators, 0-45 Gew.% Weichmacher, 0-65 Gew.% Füllstoffe, 0-30 Gew.% Thixotropierungsmittel, 0-2,5 Gew.% Pigmente und 0-5 Gew.% sonstige Additive enthält, und die Härterkomponente neben 2,0-97,9 Gew.% Oligomere oder Präpolymere mit freien Isocyanatgruppen 0-10 Gew.% Thixotropierungsmittel, 0-2,5 Gew.% Pigmente und 0-5 Gew.% sonstige Additive enthält.

Gemäß einer weiteren vorteilhaften Ausführungsform ist in dem erfindungsgemäßen Mehrkomponentenkit der Gehalt der Basiskomponente an Polyolen und/oder Polyaminen 0,5-25 Gew.%, insbesondere 1-5 Gew.%, und/oder der Gehalt der Härterkomponente an Ologimeren oder Präpolymeren mit freien Isocyanatgruppen 10-35 Gew.%, insbesondere 15-25 Gew.%, und/oder der Gehalt der Basis- und/oder der Härterkomponente an einem oder mehreren Diamiden der Formeln (I) und/oder (II) 6-16 Gew.%, insbesondere 8-12 Gew.%.

Eine weitere bevorzugte Ausführungsform des erfindungsgemäßen Mehrkomponentenkits ist dadurch gegeben, daß die Basiskomponente nur monomere oder polymere Polyole mit einer mittleren Funktionalität von zwei oder mehr OH-Gruppen pro Molekül und keine Polyamine enthält. In dieser Ausführungsform ist weiterhin vorzugsweise das Verhältnis von Oligomeren oder Präpolymeren mit freien Isocyanatgruppen und monomeren oder polymeren Polyolen, ausgedrückt als Verhältnis der Zahl der freien Isocyanatgruppen (NCO) zu der Zahl der Hydroxylgruppen (OH), im Bereich von 1-1,3, bevorzugt 1,05-1,2.

Weiterhin werden in den erfindungsgemäßen Mehrkompontenkits bevorzugt Diamide der Formel (I) eingesetzt, wobei insbesondere solche bevorzugt sind, bei denen die Substituenten R₁ und R₂ je C₁₆-C₁₈-Alkylgruppen darstellen, und X eine Ethyleneinheit ist.

Vorteilhafterweise enthält im erfindungsgemäßen Kit die Basis- und/oder Härterkomponente 0,2-0,6 Gew.% Katalysator, 20-30 Gew.% Weichmacher und 25-45 Gew.% Füllstoffe.

Die erfindungsgemäße Polyurethandicht- und -klebmasse kann erhalten werden, indem man die Basis- und Härterkomponente des Kits mischt. Sie weist eine exzellente Chemikalienbeständigkeit nach den Prüfgrundsätzen für Abwasseranlagen des Instituts für Bautechnik auf. Diese Prüfnorm fordert Volumenänderung und Gewichtsänderung sowohl bei pH 2 als auch bei pH 12 unterhalb von 5%. Für die erfindungsgemäße Polyurethanmasse werden Werte im Bereich von -0,6 bis +1,6% gemessen. Die erfindungsgemäße Polyurethanmasse läßt sich sehr gut verarbeiten und sehr gut glätten. Ein wichtiges Kriterium in der Praxis ist damit erfüllt, denn oft erweist es sich als schwierig, der einmal aufgebrachten Masse eine glatte Oberfläche zu verleihen. Minderwertige Polyurethanmassen bleiben beispielsweise beim Glätten der in einer Fuge eingespritzten Masse oft am Finger hängen. Dieser vorteilhafte Effekt der erfindungsgemäßen Polyurethanmasse ist auf die hydrophobierende Wirkung des bzw. der Diamide der Formeln (I) und/oder (II) zurückzuführen.

Aufgrund ihrer ausgezeichneten Chemikalienbeständigkeit eignen sich die erfindungsgemäßen Polyurethanmassen besonders für die Anwendung im Tiefbau. Die gute Verarbeitbarkeit, insbesondere die Glättbarkeit erweist sich jedoch auch im Hochbau als sehr vorteilhaft. Anwendungsbereiche sind z.B. der Silobau, Abwasseranlagen (Kläranlagen, Kanalisation), Rohrabdichtungen, Rohrdurchführungen, Bodenabläufe. Sie eignen sich insbesondere auch als Dichtmasse zur Herstellung von Fugenbändern. Darüber hinaus lassen sich die verschiedensten Substrate, wie z.B. Metallteile im Maschinenbau, Fahrzeugbau, Schiffsbau oder Containerbau, mit den erfindungsgemäßen Polyurethanmassen verkleben. Dabei erfolgt gleichzeitig ein Abdichten (Dichtkleben).

Die Erfindung wird im folgenden anhand eines Beispiels und zweier Vergleichsbeispiele näher erläutert.

### Basiskomponente Beispiel:

In einem 1 Liter Mischbehälter eines Labordissolvers mit Abstreifer (z.B. Molteni "Dissmax") werden 175 g Di-2-ethylhexylphtalat, 2,5 g Katalysator, 7,8 g eines niedermolekularen Diols und 53 g eines pulverisierten Amidwachses vorgelegt und 3 min. bei 600 UPM zusammengerührt. Dann gibt man 52 g Bariumsulfatpulver, 87,5 g Kaolinpulver, 17,5 g Molekularsiebpulver (3A) und 7,2 g Pigmentpulver dazu und rührt mit 250 UPM bis die Pulver untergerührt sind. Schließlich werden 87,5 g Kaolinpulver und 10 g pyrogene Kieselsäure dazugegeben und wieder bei 250 UPM gerührt, bis die Pulver untergemischt sind. Zuletzt werden der Dissolver und der Abstreifer gereinigt und mit 3.000 UPM für 10 min. unter Vakuum gerührt.

### Basiskomponente für Vergleichsbeispiel 1 und Vergleichsbeispiel 2:

In einem 1 Liter Mischbehälter eines Labordissolvers mit Abstreifer (z.B. Molteni "Dissmax") werden 175 g Di-2-ethylhexylphtalat, 2,5 g Katalysator und 38 g eines Kohlenwasserstoffharzes vorgelegt und 3 min. bei 600 UPM zusammengerührt. Dann gibt man 52 g Bariumsulfatpulver, 175 g Kaolinpulver, 17,5 g Molekularsiebpulver (3A) und 7,2 g Pigmentpulver dazu und rührt mit 250 UPM bis die Pulver untergerührt sind. Nun gibt man 12,5 g pyrogene Kieselsäure dazu und rührt sie bei 250 UPM unter. Dieser Schritt wird wiederholt, so daß insgesamt 25 g pyrogene Kieselsäure enthalten sind. Schließlich gibt man noch 7,8 g eines niedermolekularen Diols dazu und rührt diese bei 250 UPM ein. Zuletzt werden der Dissolver und der Abstreifer gereinigt und mit 3.000 UPM für 10 min. unter Vakuum gerührt.

### Härterkomponenten für Beispiel und Vergleichsbeispiel 1:

In einem 1 Liter Mischbehälter eines Labordissolvers mit Abstreifer (z.B. Molteni "Dissmax") werden 364 g Desmodur E 14, 12 g Pigment und 24 g pyrogene Kieselsäure eingewogen und bei 250 UPM gerührt bis die Pulver untergemischt sind. Dann werden der Dissolver und der Abstreifer gereinigt und mit 3.000 UPM für 5 min. unter Vakuum gerührt.

### Härterkomponente für Vergleichsbeispiel 2:

In einem 1 Liter Mischbehälter eines Labordissolvers mit Abstreifer (z.B. Molteni "Dissmax") werden 344 g Desmodur E 14, 12 g Pigment und 44 g pyrogene Kieselsäure eingewogen und bei 250 UPM gerührt bis die Pulver untergemischt sind. Dann werden der Dissolver und der Abstreifer gereinigt und mit 3.000 UPM für 5 min. unter Vakuum gerührt.

Basiskomponente und Härterkomponente wurden jeweils im Massenverhältnis 100:30 bei bis zu 400 UPM 5 min. gemischt, und die gewonnene Polyurethanmasse wurde nach 15 min. auf ihre Extrudierbarkeit nach DIN EN 29048 und ihre Standfestigkeit nach DIN EN 27390 hin untersucht.

Direkt nach dem Mischen wurde die Glättbarkeit der Polyurethanmasse getestet. Die Prüfung erfolgte durch den Praxisversuch, d.h. es wurde eine Fuge angelegt und versucht, eine glatte Fugenoberfläche mit einem Glättspachtel bzw. dem Finger herzustellen.

Daneben wurde die Chemikalienbeständigkeit nach den "Bau- und Prüfgrundsätzen für 2K-Dichtstoffe für Abwasseranlagen" des Instituts für Bautechnik (Mitteilungen des IFBT, März 1981) bestimmt.

Das Vergleichsbeispiel 1 zeigt, daß in Mehrkomponentenkits, bei denen eine Komponente (Härterkomponente) die gleiche Zusammensetzung aufweist wie das erfindungsgemäße Kit und in der anderen Komponente Kohlenwasserstoffharze anstelle von Amidwachs zur Chemikalienbeständigkeit zugegeben wurden, die Eigenschaften der erhaltenen Polyurethanmasse wesentlich schlechter sind. Vergleichsbeispiel 1 zeigt einen sehr hohen Wert für die Extrudierbarkeit, aber auch sehr schlechte Glättbarkeit und eine ungenügende Standfestigkeit.

Im Vergleichsbeispiel 2, das ebenfalls ein Kohlenwasserstoffharz anstelle des Amidwachses enthält, wurden ausgehend von Vergleichsbeispiel 1 durch Anpassung der einzelnen Komponenten die Eigenschaften optimiert. Dennoch ist diese Polyurethanmasse des Standes der Technik der erfindungsgemäßen Masse in ihren Eigenschaften unterlegen. Das erfindungsgemäße Beispiel zeigt eine deutlich bessere Chemikalienbeständigkeit (geringere Volumenänderung und Gewichtsänderung). Die Standfestigkeit ist gleich (0 mm), jedoch läßt sich die erfindungsgemäße Polyurethanmasse bei vergleichbar guter Extrudierbarkeit von 1.154 g/min wesentlich besser glätten.

Obige Ergebnisse zeigen, daß die erfindungsgemäße Verwendung von Diamiden in Polyurethanmassen nicht nur zu einer ausgezeichneten Chemikalienbeständigkeit führt, sondern bei gleichen Verarbeitungskriterien die Glättbarkeit positiv beeinflußt. Die Verwendung der Diamide der Formel (I) und/oder (II) führt bei der Herstellung der Dicht- und Klebmasse auch zu einer beträchtlichen Kostensenkung im Vergleich zu kohlenwasserstoffhaltigen Polyurethanmassen.

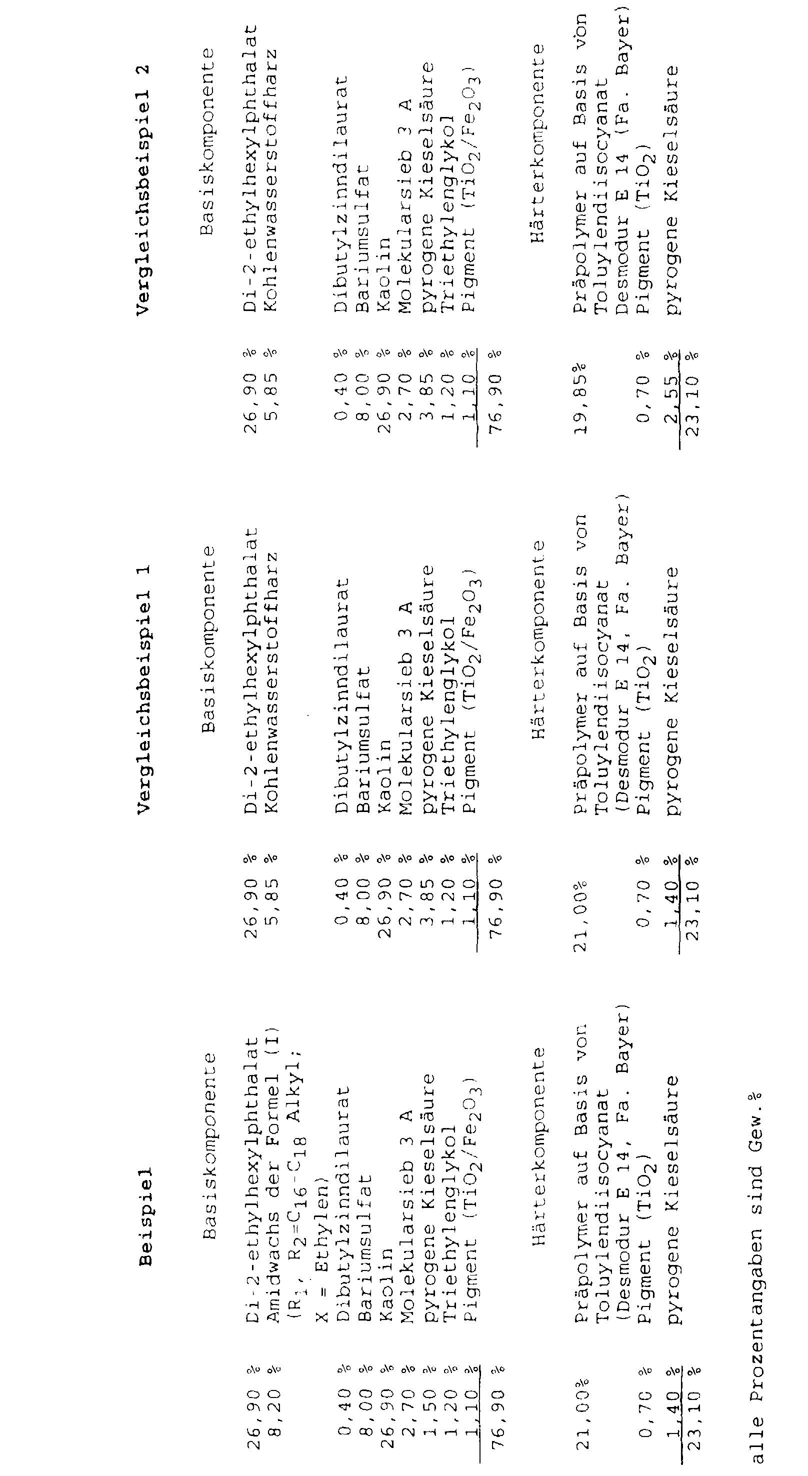

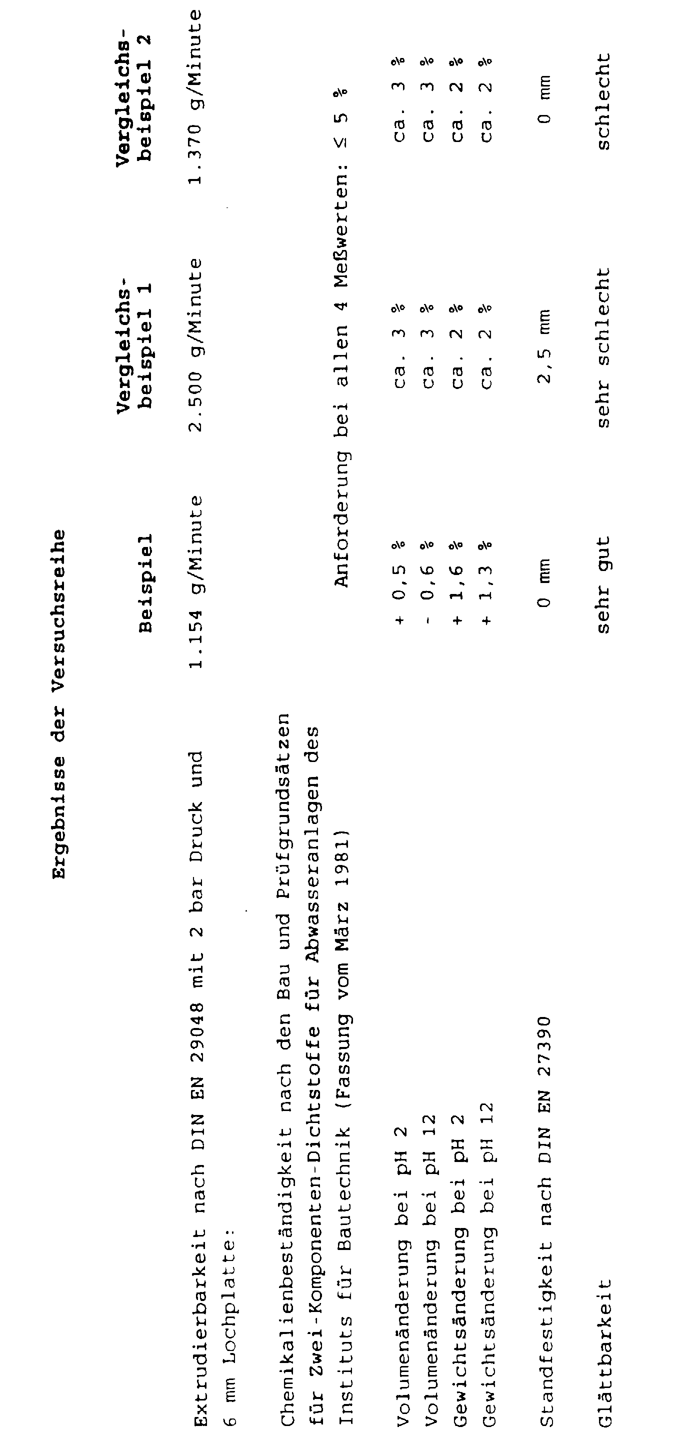

## Patentansprüche

1. Mehrkomponentenkit für eine Polyurethandicht- und -klebmasse, das mindestens eine Basiskomponente und eine Härterkomponente umfaßt, wobei
die Basiskomponente 0,1-88 Gew.% eines oder mehrerer monomerer oder polymerer Polyole und/oder Polyamine mit einer mittleren Funktionalität von zwei oder mehr OH-Gruppen pro Molekül bzw. zwei oder mehr primäre oder sekundäre NH-Gruppen pro Molekül und
die Härterkomponente 2,0-97,9 Gew.% eines oder mehrerer Oligomere oder Präpolymere mit einer mittleren Funktionalität von zwei oder mehr freien Isocyanatgruppen pro Molekül enthält,
die Basis- und/oder die Härterkomponente 0-8 Gew.% Lösemittel, 0-2 Gew.% eines Katalysators, 0-45 Gew.% Weichmacher, 0-65 Gew.% Füllstoffe, 0-40 Gew.% Thixotropierungsmittel, 0-5 Gew.% Pigmente und 0-10 Gew.% sonstige Additive enthalten,
dadurch gekennzeichnet, daß die Basis- und/oder die Härterkomponente insgesamt 2-25 Gew.% eines oder mehrerer Diamide der Formeln (I) und/oder (II) 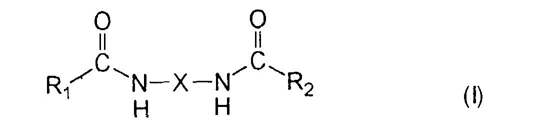 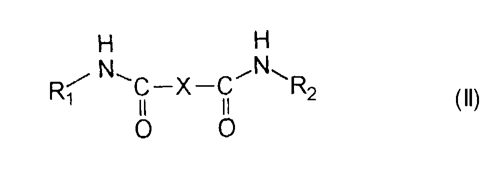 worin R₁ und R₂ verschieden oder gleich sind und eine verzweigte oder unverzweigte C₁₂₋₂₄-Alkylgruppe oder eine verzweigte oder unverzweigte c₁₂₋₂₄-Alkenylgruppe, die jeweils mit OH substituiert sein können, und X eine C₂₋₄-Alkyleneinheit bedeuten, enthalten,
wobei sich alle Gew.%-Angaben auf das Gesamtgewicht von Basis- und Härterkomponente beziehen.

2. Mehrkomponentenkit nach Anspruch 1, dadurch gekennzeichnet, daß die Basiskomponente 2-25 Gew.% eines oder mehrerer Diamide der Formel (I) und/oder (II), 0-8 Gew.% Lösemittel, 0-2 Gew.% eines Katalysators, 0-45 Gew.% Weichmacher, 0-65 Gew.% Füllstoffe, 0-30 Gew.% Thixotropierungsmittel, 0-2,5 Gew.% Pigmente und 0-5 Gew.% sonstige Additive enthält, und die Härterkomponente 0-10 Gew.% Thixotropierungsmittel, 0-2,5 Gew.% Pigmente und 0-5 Gew.% sonstige Additive enthält.

3. Mehrkomponentenkit nach Anspruch 1 oder 2, dadurch gekennzeichnet, daß der Gehalt der Basiskomponente an einem oder mehreren monomeren oder polymeren Polyolen und/oder Polyaminen mit einer mittleren Funktionalität von zwei oder mehr OH-Gruppen pro Molekül bzw. zwei oder mehr primäre oder sekundäre NH-Gruppen pro Molekül 0,5-25 Gew.%, ist.

4. Mehrkomponentenkit nach einem oder mehreren der vorhergehenden Ansprüche, dadurch gekennzeichnet, daß der Gehalt der Härterkomponente an einem oder mehreren Oligomeren oder Präpolymeren mit einer mittleren Funktionalität von zwei oder mehr freien Isocyanatgruppen pro Molekül 10-35 Gew.%, ist.

5. Mehrkomponentenkit nach einem oder mehreren der vorhergehenden Ansprüche, dadurch gekennzeichnet, daß der Gehalt der Basis- und/oder der Härterkomponente an einem oder mehreren Diamiden der Formeln (I) und/oder (II) insgesamt 6 -16 Gew.% ist.

6. Mehrkomponentenkit nach einem oder mehreren der vorhergehenden Ansprüche, dadurch gekennzeichnet, daß die Basis- und/oder die Härterkomponente 0,2-0,6 Gew.% eines Katalysators, 20-30 Gew.% Weichmacher und 25-45 Gew.% Füllstoffe enthalten.

7. Mehrkomponentenkit nach einem oder mehreren der vorhergehenden Ansprüche, dadurch gekennzeichnet, daß das Thixotropierungsmittel pyrogene Kieselsäure ist und in der Basis- und/oder Härterkomponente in einer Gesamtmenge von 0-5 Gew.% vorliegt.

8. Mehrkomponentenkit nach einem oder mehreren der vorhergehenden Ansprüche, dadurch gekennzeichnet, daß die Basiskomponente ein oder mehrere monomere oder polymere Polyole mit einer mittleren Funktionalität von zwei oder mehr OH-Gruppen pro Molekül enthält.

9. Mehrkomponentenkit nach Anspruch 8, dadurch gekennzeichnet, daß das Verhältnis von Oligomer oder Präpolymer mit freien Isocyanatgruppen und monomeren oder polymeren Polyolen, ausgedrückt als Verhältnis der Zahl der freien Isocyanatgruppen (NCO) zu der Zahl der Hydroxylgruppen (OH), im Bereich von 1 bis 1,3, liegt.

10. Mehrkomponentenkit nach einem oder mehreren der vorhergehenden Ansprüche, dadurch gekennzeichnet, daß die Basis- und/oder Härterkomponente ein oder mehrere Diamide der Formel (I) enthält.

11. Mehrkomponentenkit nach Anspruch 10, dadurch gekennzeichnet, daß die Substituenten R₁ und R₂ in den Diamiden der Formel (I) je C₁₆-C₁₈-Alkylgruppen darstellen, und X eine Ethyleneinheit ist.

12. Polyurethandicht- und -klebmasse, erhältlich durch Mischen der Basiskomponente und der Härterkomponente gemäß einem der Kits der Ansprüche 1 bis 11.

13. Polyurethandicht- und -klebmasse nach Anspruch 12 in Form eines Fugenbandes.

## Claims

1. Multi-component kit for a polyurethane sealing and adhesive composition, which comprises at least one base component and a curing component, wherein
the base component contains 0.1-88 wt.% of one or more monomeric or polymeric polyols and/or polyamines having an average functionality of two or more OH groups per molecule or two or more primary or secondary NH groups per molecule, and
the curing component contains 2.0-97.9 wt.% of one or more oligomers or prepolymers having an average functionality of two or more free isocyanate groups per molecule,
the base component and/or the curing component contain 0-8 wt.% of solvent, 0-2 wt.% of a catalyst, 0-45 wt.% of plasticiser, 0-65 wt.% of fillers, 0-40 wt.% of thixotropic agents, 0-5 wt.% of pigments and 0-10 wt.% of other additives,
characterised in that the base component and/or the curing component contain in total 2-25 wt.% of one or more diamides of the formulae (I) and/or (II) 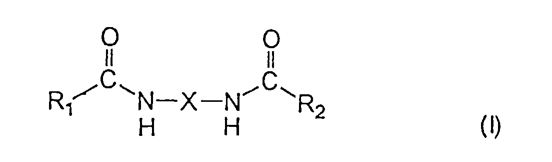 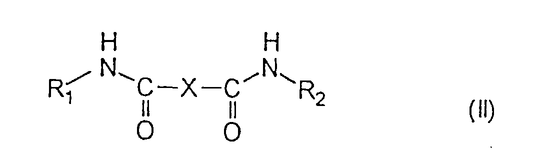 wherein R₁ and R₂ are different or the same and denote a branched or unbranched C₁₂₋₂₄ alkyl group or a branched or unbranched C₁₂₋₂₄ alkenyl group, which may be substituted in each case by OH, and X denotes a C₂₋₄ alkylene unit,
wherein all wt.% details relate to the total weight of base component and curing component.

2. Multi-component kit according to claim 1, characterised in that the base component contains 2-25 wt.% of one or more diamides of the formula (I) and/or (II), 0-8 wt.% of solvent, 0-2 wt.% of a catalyst, 0-45 wt.% of plasticiser, 0-65 wt.% of fillers, 0-30 wt.% of thixotropic agents, 0-2.5 wt.% of pigments and 0-5 wt.% of other additives, and the curing component contains 0-10 wt.% thixotropic agents, 0-2.5 wt.% of pigments and 0-5 wt.% of other additives.

3. Multi-component kit according to claim 1 or 2, characterised in that the content of the base component of one or more monomeric or polymeric polyols and/or polyamines having an average functionality of two or more OH groups per molecule or two or more primary or secondary NH groups per molecule is 0.5-25 wt.%.

4. Multi-component kit according to one or more of the preceding claims, characterised in that the content of the curing component of one or more oligomers or prepolymers having an average functionality of two or more free isocyanate groups per molecule is 10-35 wt.%.

5. Multi-component kit according to one or more of the preceding claims, characterised in that the content of the base component and/or the curing component of one or more diamides of the formulae (I) and/or (II) is in total 6-16 wt.%.

6. Multi-component kit according to one or more of the preceding claims, characterised in that the base component and/or the curing component contain 0.2-0.6 wt.% of a catalyst, 20-30 wt.% of plasticiser and 25-45 wt.% of fillers.

7. Multi-component kit according to one or more of the preceding claims, characterised in that the thixotropic agent is pyrogenic silicic acid and is present in the base component and/or the curing component in a total quantity of 0-5 wt.%.

8. Multi-component kit according to one or more of the preceding claims, characterised in that the base component contains one or more monomeric or polymeric polyols having an average functionality of two or more OH groups per molecule.

9. Multi-component kit according to claim 8, characterised in that the ratio of oligomer or prepolymer having free isocyanate groups and monomeric or polymeric polyols, expressed as the ratio of the number of free isocyanate groups (NCO) to the number of hydroxyl groups (OH), lies in the range from 1 to 1.3.

10. Multi-component kit according to one or more of the preceding claims, characterised in that the base component and/or the curing component contains one or more diamides of the formula (I).

11. Multi-component kit according to claim 10, characterised in that the substituents R₁ and R₂ in the diamides of the formula (I) each represent C₁₆-C₁₈ alkyl groups, and X is an ethylene unit.

12. Polyurethane sealing and adhesive composition, which can be obtained by mixing the base component and the curing component according to one of the kits of claims 1 to 11.

13. Polyurethane sealing and adhesive composition according to claim 12 in the form of a jointing tape.

## Revendications

1. Kit à plusieurs composants pour une substance d'étanchéité et adhésive au polyuréthanne qui comprend au moins un composant de base et un composant durcisseur, dans lequel
le composant de base contient 0,1-88% en poids d'un ou plusieurs polyols monomères ou polymères et/ou polyamines monomères ou polymères ayant une fonctionnalité moyenne de deux groupements OH ou plus par molécule, respectivement de deux groupements NH primaires ou secondaires ou plus par molécule, et
le composant durcisseur contient 2,0-97,9% en poids d'un ou plusieurs oligomères ou prépolymères ayant une fonctionnalité moyenne de deux groupements isocyanate libres ou plus par molécule,
le composant de base et/ou le composant durcisseur contiennent 0-8% en poids de solvant, 0-2% en poids d'un catalyseur, 0-45% en poids de plastifiant, 0-65% en poids de charges, 0-40% en poids d'agent thixotrope, 0-5% en poids de pigments et 0-10% en poids d'autres additifs,
caractérisé en ce que les le composant de base et/ou le composant durcisseur contiennent au total 2-25% en poids d'un ou plusieurs diamides des formules (I) et/ou (II) 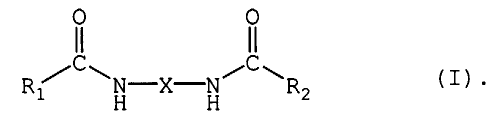 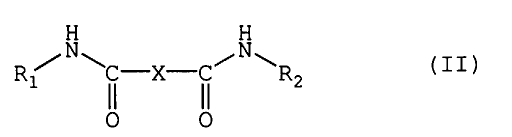 dans lesquelles R1 et R2 sont identiques ou différents et représentent un groupement alkyle en C12-C24 linéaire ou ramifié ou un groupement alcényle en C12-C24 linéaire ou ramifié, qui peuvent chacun être substitués par OH, et X représentent une unité alkylène en C2-C4,
toutes les indications en % en poids se basant sur le poids total des composants de base et durcisseur,

2. Kit à plusieurs composants suivant la revendication 1, caractérisé en ce que le composant de base contient 2-25% en poids d'un ou plusieurs diamides de formule (I) et/ou (II), 0-8% en poids de solvant, 0-2% en poids d'un catalyseur, 0-45% en poids de plastifiant, 0-65% en poids de charges, 0-30% en poids d'agent thixotrope, 0-2,5% en poids de pigments et 0-5% en poids d'autres additifs, et le composant durcisseur contient 0-10% en poids d'agent thixotrope, 0-2,5% en poids de pigments et 0-5% en poids d'autres additifs.

3. Kit à plusieurs composants suivant la revendication 1 ou 2, caractérisé en ce que la teneur du composant de base en un ou plusieurs polyols monomères ou polymères et/ou polyamines monomères ou polymères ayant une fonctionnalité moyenne de deux groupements OH ou plus par molécule ou, respectivement deux groupements NH primaires ou secondaires ou plus par molécule, est de 0,5-25% en poids.

4. Kit à plusieurs composants suivant l'une ou plusieurs des revendications précédentes, caractérisé en ce que la teneur du composant durcisseur en un ou plusieurs oligomères ou prépolymères ayant une fonctionnalité moyenne de deux groupements isocyanate libres ou plus par molécule, est de 10-35% en poids.

5. Kit à plusieurs composants suivant l'une ou plusieurs des revendications précédentes, caractérisé en ce que la teneur du composant de base et/ou du composant durcisseur en un ou plusieurs diamides des formules (I) et/ou (II) est au total de 6-16% en poids.

6. Kit à plusieurs composants suivant l'une ou plusieurs des revendications précédentes, caractérisé en ce que le composant de base et/ou le composant durcisseur contiennent 0,2-0,6% en poids d'un catalyseur, 20-30% en poids de plastifiant et 25-45% en poids de charges.

7. Kit à plusieurs composants suivant l'une ou plusieurs des revendications précédentes, caractérisé en ce que l'agent thixotrope est de la silice pyrogénée et est présent dans le composant de base et/ou durcisseur en une quantité totale de 0-5% en poids.

8. Kit à plusieurs composants suivant l'une ou plusieurs des revendications précédentes, caractérisé en ce que le composant de base contient un ou plusieurs polyols monomères ou polymères ayant une fonctionnalité moyenne de deux groupements OH ou plus par molécule.

9. Kit à plusieurs composants suivant la revendication 8, caractérisé en ce que le rapport des oligomères ou prépolymères avec groupements isocyanate libres et des polyols monomères ou polymères, exprimé par le rapport du nombre de groupements isocyanate libres (NCO), au nombre de groupements hydroxyle (OH), se situe dans l'intervalle de 1 à 1,3.

10. Kit à plusieurs composants suivant l'une ou plusieurs des revendications précédentes, caractérisé en ce que le composant de base et/ou le durcisseur contient un ou plusieurs diamides de formule (I).

11. Kit à plusieurs composants suivant la revendication 10, caractérisé en ce que les substituants R₁ et R₂ représentent dans les diamides de formule (I) chaque fois des groupements alkyle en C₁₆-C₁₈, et X est une unité éthylène.

12. Substance d'étanchéité et adhésive au polyuréthanne pouvant être obtenue par mélange du composant de base et du composant durcisseur suivant l'un des kits des revendications 1 à 11.

13. Substance d'étanchéité et adhésive au polyuréthanne suivant la revendication 12, sous la forme d'une bande couvre-joint préformée.
